# EUROPÄISCHE PATENTANMELDUNG

(11) **EP 1 555 565 A1**
(43) Veröffentlichungstag der Anmeldung: **20.07.2005**
(21) Anmeldenummer: 04031024.5
(22) Anmeldetag: 30.12.2004
(51) Int. Cl.: G02B 27/09, H01S 3/00, G02B 6/42

(54) **Vorrichtung zur optischen Strahltransformation einer linearen Anordnung mehrerer Lichtquellen**

(30) Priorität: 15.01.2004 DE 102004002221
(71) Anmelder: Unique-m.o.d.e. AG, 07745 Jena (DE)
(72) Erfinder: Von Freyhold, Thilo, Dipl.-Phys., 10119 Berlin (DE); Hünkemeier, Jörg, Dr. Dipl.-Phys., 07743 Jena (DE)
(74) Vertreter: Pfenning, Meinig & Partner GbR

(57) **Zusammenfassung**

Die vorliegende Erfindung bezieht sich auf eine optische Symmetrierungsvorrichtung zur Symmetrierung der Strahlung von Laserdioden. Die Symmetrierungsvorrichtung weist eine Zylinderlinsen-Optik (3), ein Zylinderlinsen-Array (4), sowie ein Ablenkelement (5) auf. Das Zylinderlinsen-Array (4) weist hierbei mindestens zwei in fester Zuordnung nebeneinander angeordnete zylindrische Einzellinsen (4A) auf, wobei der Abstand zweier benachbarter Einzellinsen (4A) kleiner ist als der Abstand zweier benachbarter linearer optischer Emitter (2).

## Beschreibung

Die vorliegende Erfindung bezieht sich auf eine optische Symmetrierungsvorrichtung zur Symmetrierung der Strahlung von Laserdioden. Zur Herstellung von Hochleistungslaserdiodenanordnungen werden eine Mehrzahl von Laserdioden in fester Zuordnung zu sog. Laserdiodenbarren nebeneinander angeordnet. Derartige Laserdiodenbarren mit optischen Ausgangsleistungen beispielsweise im Bereich bis etwa 40 W bestehen üblicherweise aus mehreren in einer Reihe angeordneten Laserdioden als Einzelemittern mit einer geometrischen Abmessung der abstrahlenden Fläche zwischen etwa 50 x 1 µm und etwa 200 x 1 µm, wobei die lineare Anordnung dieser Emitter stets in Richtung ihrer größten Ausdehnung erfolgt. Die Ausgangsstrahlung dieser Laserdiodenbarren ist extrem unsymmetrisch. Für die meisten praktischen Anwendungen solcher Laserdiodenbarren, z.B. zum Pumpen von Festkörperlasern, für Zwecke der Materialbearbeitung und medizinische Zwecke wird ein symmetrisches Bündel hoher Strahldichte benötigt. Für einen breiten Einsatz von Hochleistungsdiodenlasern in den genannten Gebieten sind somit möglichst kompakte optische Systeme zur Strahlsymmetrierung erforderlich.

Vorrichtungen bzw. Anordnungen zur Symmetrierung der Strahlung von Hochleistungslaserdioden sind bereits Stand der Technik. Eine erste Gruppe von Verfahren verwendet spezielle Strahlendrehelemente, beispielsweise in Form von Prismen, wodurch die von den einzelnen Emittern ausgesandten Strahlenbündel räumlich typischerweise um 90° gedreht werden (US 5,168,401 A; EP 0 484 276 A1; US 5,513,201 A). In einer zweiten Gruppe von Anordnungen durchläuft die Ausgangsstrahlung der Laserdioden ein System aus zwei schwach zueinander geneigten, hoch reflektierenden Flächen derart, dass sich am Ausgang dieses Systems eine geeignete Rekonfigurierung des Laserdiodenbündels ergibt (WO 95/15510). Nachteilig an diesen beiden Gruppen von Anordnungen ist insbesondere die Kompliziertheit der verwendeten mikrooptischen Elemente, wobei dies insbesondere für die Strahlendrehung gilt, bei der eine Realisierung für größere Emitterzahlen im Laserdiodenbarren als äußerst schwierig erscheint, der hohe Justieraufwand des Gesamtsystems und die fehlende Möglichkeit zur preisgünstigen Herstellung solcher Systeme.

Weniger komplizierte Systeme zur optischen Strahltransformation finden sich in DE 198 20 154 A1 und in DE 196 45 150 A1. Die DE 198 20 154 A1 beschreibt eine Vorrichtung zur optischen Strahltransformation eines Strahlbündels mit ausgedehntem Strahlenquerschnitt mit optischen Elementen, die im Strahlengang angeordnete optisch aktive Grenzflächen aufweisen. Das Ablenken der Strahlbündel wird durch eine Fourierlinse übernommen, die auch gleichzeitig als Kollimatoroptik die Divergenz des Gesamtstrahlbündels minimiert. In der hinteren Brennebene der Fourierlinse befindet sich ein nachfolgendes Ablenkelement. In der Anordnung nach DE 198 20 154 A1 müssen die Strahlungsemitter in der vorderen Brennebene der Fourierlinse und das zweite Winkeltransformationselement in der hinteren Brennebene der Fourierlinse angeordnet sein. Hierdurch ergibt sich nachteiligerweise zum einen eine große Gesamtlänge der Anordnung, hervorgerufen durch einen Abstand von zumindest zweimal der Brennweite der Fourierlinse zwischen Emitter und Ablenkelement, zum anderen muss die Fourierlinse eine große Apertur und gute Abbildungseigenschaften und somit auch eine lange Brennweite besitzen, da die Strahlbündel der Emitter vor der Fourierlinse eine große Divergenz aufweisen und parallel zur optischen Achse verlaufen. Nachteilig ist desweiteren, dass die Strahleigenschaften und die Ablenkwinkel der Strahlbündel nicht unabhängig voneinander eingestellt werden können.

Die DE 196 45 150 A1 betrifft ebenfalls eine optische Vorrichtung bzw. Anordnung zur Symmetrierung der Strahlung von Laserdioden. Anstelle eines Zylinderlinsen-Arrays, wie in der vorliegenden Erfindung, wird jedoch in der DE 196 45 150 A1 ein Direktionselement in Form einer Feldlinse mit einer Brennweite entsprechend dem Abstand zwischen der Feldlinse und einem Redirektionselement eingesetzt. Nachteilig an der in dieser Patentschrift beschriebenen Anordnung ist, dass die Strahleigenschaften der Strahlbündel der Laserdioden nicht durch das Direktionselement beeinflusst werden können und dass bei Verwendung einer Feldlinse als Direktionselement der Abstand zwischen der Feldlinse und dem Redirektionselement relativ groß gewählt werden muss. Dies liegt daran, dass die Feldlinse aufgrund der großen Ausdehnung des Laserdioden-Arrays eine große Apertur und gute Abbildungseigenschaften aufweisen muss, was eine lange Brennweite voraussetzt. Das Redirektionselement ist in der DE 196 45 150 A1 in der hinteren Brennebene der Feldlinse angeordnet. Auch bei der DE 196 45 150 A1 können die Strahleigenschaften und die Ablenkwinkel der Strahlenbündel nicht unabhängig voneinander eingestellt werden. Auch weist die Anordnung nach dieser Patentschrift eine vergleichsweise große Gesamtlänge auf.

Weiter zu erwähnen in Bezug auf den Stand der Technik ist die Patentschrift US 5,517,359 A. Die in dieser Patentschrift beschriebene Strahlformungsoptik dient jedoch nicht zur Symmetrierung der Abstrahlung eines Laserdioden-Arrays, sondern zur Erzeugung einer homogenen Linienbeleuchtung für ein Lichtventilarray. Ein in der Strahlformungsoptik der Patentschrift eingesetztes Zylinderlinsen-Array dient vornehmlich zur Ablenkung der Strahlbündel des Laserdioden-Arrays, wobei die Hauptstrahlen der Strahlbündel in einem bestimmten Abstand von dem Zylinderlinsen-Array auf der optischen Achse zusammenfallen sollen. Eine dem Zylinderlinsen-Array vorgeschaltete Zylinderlinsenoptik ist in Bezug auf die optische Achse nicht verkippt bzw. verdreht. Durch das Zylinderlinsen-Array werden somit auch Strahleigenschaften transformiert. Durch die Strahlformungsoptik der US 5,517,359 A erfolgt jedoch keine Trennung von Strahlbündeln in einer Ebene und somit ist auch keine unabhängige Richtungsmanipulation einzelner Strahlbündel zum Zwecke der Strahlsymmetrierung möglich. Ein zusätzliches Ablenkelement kann und soll in der US 5,517,359 A somit nicht eingesetzt werden.

Der Erfindung liegt somit die Aufgabe zugrunde, eine optische Vorrichtung bzw. Anordnung zur Symmetrierung der Strahlung einer Mehrzahl von in fester Zuordnung nebeneinander angeordneten Laserdioden zur Verfügung zu stellen, die unter Verwendung vergleichsweise einfacher mikrooptischer Komponenten die Ausgangsstrahlung ohne Strahldichteneinbußen bei verbessertem optischen Wirkungsgrad transformiert, und die es ermöglicht, dass die Strahleigenschaften und die Ablenkwinkel von Strahlenbündeln unabhängig voneinander eingestellt werden können und die eine im Vergleich zum Stand der Technik kurze Gesamtlänge bzw. verringerte Abmessung der Anordnung aufweist.

Diese Aufgabe wird durch die Symmetrierungsvorrichtung gemäß Patentanspruch 1 gelöst. Vorteilhafte Weiterbildungen der erfindungsgemäßen Symmetrierungsvorrichtung werden in den abhängigen Ansprüchen beschrieben.

Eine erfindungsgemäße optische Symmetrierungsvorrichtung zur Symmetrierung der Abstrahlung eines eindimensionalen Laserdioden-Arrays bzw. Laserdiodenbarrens weist die folgenden Bestandteile auf: Im Strahlengang des Laserdioden-Arrays ist dem Laserdioden-Array eine Zylinderlinsenoptik nachgeordnet. Der Zylinderlinsenoptik ist im Strahlengang ein Zylinderlinsen-Array nachgeordnet, diesem ist im Strahlengang ein Ablenkelement nachgeordnet. In einer vorteilhaften Ausgestaltung der erfindungsgemäßen Symmetrierungsvorrichtung weist diese zusätzlich zu den genannten Elementen eine Fokussierungsoptik auf. Die Symmetrierungsvorrichtung bzw. die optische Anordnung dient wie beschrieben zur Symmetrierung der Abstrahlung des eindimensionalen Laserdioden-Arrays bzw. Laserdiodenbarrens. Ein Laserdioden-Array mit unsymmetrischen Strahleigenschaften sowie unsymmetrischer Strahlqualität wird hierbei in einen virtuellen Emitter mit symmetrischen Strahleigenschaften transformiert. Das Laserdioden-Array ist hierbei vorzugsweise so ausgestaltet, dass die einzelnen Emitter des Arrays in einem definierten und vorzugsweise für alle Emitter identischen Abstand nebeneinander in einer ersten Richtung (x-Richtung / x-Achse) senkrecht zur optischen Abstrahlungsrichtung der Emitter bzw. optischen Achse (wobei die optische Achse hier und im folgenden als z-Richtung / z-Achse bezeichnet wird und die genannte erste Richtung im folgenden als x-Richtung / x-Achse bezeichnet wird) angeordnet sind, dass die Hauptstrahlen der Strahlbündel der einzelnen Emitter in z-Richtung verlaufen und dass ein Zwischenraum zwischen jeweils zwei Emittern besteht. Der Versatz in x-Richtung eines Emitters zu einem benachbarten Emitter wird hier auch als Pitch bezeichnet. Ein Emitter kann durch eine nur in x-Richtung ausgedehnte Lichtquelle mit typischerweise in die Richtung senkrecht zur x- und z-Richtung (im folgenden auch als y-Richtung bezeichnet) größerer Divergenz der Abstrahlung beschrieben werden. Die Strahlqualität des Laserdioden-Arrays ist in Richtung der Emitteranordnung (x-Richtung) geringer als in der dazu senkrechten Richtung (y-Richtung). Dadurch, dass eine Zylinderlinsenoptik mit ausreichend großer Isoplanasie in geneigter Orientierung zum Laserdiodenbarren angeordnet wird, d.h. um die z-Achse bzw. die optische Achse gekippt wird, erhalten die Ausgangsbündel der Einzelemitter des Laserdiodenbarrens jeweils unterschiedliche Abstrahlwinkel und werden somit in genügend großem Abstand hinter der Linse in der Richtung senkrecht zu der Richtung der linearen Anordnung der Einzelemitter und zur optischen Achse getrennt. Diese Auslenkung kann statt durch ein Verdrehen der Zylinderlinse um die z-Achse durch die Anordnung eines optionalen separaten Ablenkelementes nach der Zylinderlinse bewirkt werden. Die Strahlbündel der in der x-z-Ebene in x-Richtung angeordneten Emitter werden also durch die gegebenenfalls leicht um die z-Achse gedrehte Zylinderlinsenoptik in der auf der x-Achse senkrechten y-z-Ebene kollimiert und gegebenenfalls derart in y-Richtung mit unterschiedlichen Ablenkwinkeln abgelenkt, dass sie am Ort des Ablenkelements in der y-z-Ebene voneinander vollständig getrennt sind. Die Einzellinsen des der Zylinderlinsenoptik nachgeordneten Zylinderlinsen-Arrays sind in einem definierten und für alle Einzellinsen identischen Abstand in x-Richtung nebeneinander angeordnet, wobei der Pitch des Zylinderlinsen-Arrays etwas kleiner ist als der Pitch des Laserdioden-Arrays. Es ist nun jedem Emitter des Laserdioden-Arrays eine Einzellinse des Zylinderlinsen-Arrays so zugeordnet, dass in x-Richtung der Versatz zwischen Emitter und Einzellinse für den auf der optischen Achse liegenden Emitter minimal, z.B. gleich 0, und für die beiden von der optischen Achse am entferntesten liegenden Emitter maximal ist. Der Versatz nimmt also in x-Richtung mit wachsendem Abstand der Einzellinse von der optischen Achse zu. Das Zylinderlinsen-Array transformiert die Strahleigenschaften der Strahlbündel der Emitter in der x-z-Ebene und lenkt die Strahlbündel derart in der x-z-Ebene ab, dass deren Hauptstrahlen am Ort des Ablenkelements zusammenfallen. Durch geeignete Wahl der gemeinsamen Brennweite der Einzellinsen, der Brennweite der Zylinderlinsenoptik sowie des Grades der Drehung der Zylinderlinsenoptik um die optische Achse werden die Strahleigenschaften und der Verlauf der Strahlbündel so angepasst, dass das Gesamtstrahlbündel in der x-z- und y-z-Ebene eine gleiche Ausdehnung besitzt und dass die Divergenz der einzelnen Strahlbündel in der x-z-Ebene der Divergenz des Gesamtstrahlbündels in der y-z-Ebene entspricht. Weiter wird gewährleistet, dass der durch die optische Anordnung erzeugte virtuelle Emitter in der x-z- und y-z-Ebene symmetrische Strahleigenschaften aufweist. Nach Festlegen der Brennweite der Einzellinsen werden durch geeignete Wahl des Pitchs des Zylinderlinsen-Arrays die erforderlichen Ablenkwinkel der Strahlbündel in der x-z-Ebene realisiert. Der Abstand zwischen Zylinderlinsen-Array und Ablenkelement ist daher innerhalb weiter Grenzen frei wählbar, wodurch sich weitere Freiheitsgrade bezüglich der Abmessungen des Ablenkelements ergeben. Das dem Zylinderlinsen-Array nachgeordnete Ablenkelement lenkt nun jedes Strahlbündel in der x-z-Ebene derart ab, dass die durch das Zylinderlinsen-Array verursachte Ablenkung jeweils wieder kompensiert wird. Die Hauptstrahlen der Strahlbündel fallen in der x-z-Ebene nach dem Ablenkelement also mit der optischen Achse zusammen. Das Gesamtstrahlbündel weist nach dem Ablenkelement in der x-z- und y-z-Ebene eine gleiche Divergenz und Ausdehnung sowie eine gleiche Ausdehnung der virtuellen Strahlbündeltaille auf. Durch die dem Ablenkelement in einer der bevorzugten Ausgestaltungsformen der erfindungsgemäßen Vorrichtung im Strahlengang nachfolgende Abbildungsoptik bzw. Fokussieroptik lässt sich das Gesamtstrahlbündel dann beispielsweise in eine Glasfaser mit angepasstem Kerdurchmesser und Akzeptanzwinkel einkoppeln.

Die vorstehend beschriebene optische Symmetrierungsvorrichtung weist gegenüber dem Stand der Technik insbesondere die folgenden Vorteile auf:
- Die Strahleigenschaften und die Ablenkwinkel der Strahlbündel in der x-z-Ebene können durch Verwendung des Zylinderlinsen-Arrays in der beschriebenen Form unabhängig voneinander eingestellt werden. Dies ist weder bei Verwendung einer Feldlinse, noch bei Verwendung einer Fourierlinse möglich.
- Durch Verwendung eines Zylinderlinsen-Arrays in der beschriebenen Form lässt sich eine optische Anordnung mit gegenüber dem Stand der Technik günstigeren Abmessungen realisieren. Dies bedeutet, dass sich bei gegebenen Emittereigenschaften und gegebener Emitteranordnung in x-Richtung unter der Bedingung vergleichbar guter Abbildungseigenschaften und der Erzeugung eines symmetrischen virtuellen Emitters, der sich einfach in einen symmetrischen Spot abbilden lässt, durch den Einsatz der Zylinderlinsenoptik ein zusätzlicher Designfreiheitsgrad ergibt, der es erlaubt:
   ο Ort und Ausdehnung des Redirektionselementes in Grenzen frei zu wählen
   ο Die Aperturen der nachfolgenden Kollimatorund/oder Abbildungs-Optik zu minimieren
   ο Bei Verwendung einer zwischengeschalteten Kollimator- und/oder Abbildungsoptik eine gegenüber dem Stand der Technik reduzierte Gesamtlänge der optischen Anordnung zu erzielen.
- In einfacheren Anordnungen, die den Barren ohne Strahlformung lediglich abbilden, lässt sich mit einem Zylinderlinsen-Array in der beschriebenen Form die Funktion eines den Füllfaktor, d.h. das Strahlparameter-Produkt, verbessernden slowaxis-Kollimator-Arrays mit der Funktion einer Feldlinse in einem Element vereinigen. In dieser Weise sind diese beiden Funktionen einfacher, kostengünstiger und verlustfreier zu realisieren.

Erfindungsgemäße optische Symmetrierungsvorrichtungen können wie in einem der nachfolgenden Beispiele beschreiben ausgeführt sein oder verwendet werden. Dieselben oder entsprechende Bestandteile bzw. Bauteile tragen in den folgenden Figuren dieselben Bezugszeichen.

Es zeigen
- Figur 1: den Verlauf der Ausgangsstrahlbündel dreier linearer Emitter durch die optische Anordnung in zwei Ebenen.
- Figur 2: denselben Verlauf, allerdings ist hier jedes Ausgangsstrahlbündel aus den Strahlbündeln dreier Feldpunkte eines Emitters aufgebaut.
- Figur 3: einen Detailausschnitt von Figur 2.
- Figur 4: schematisch den Aufbau eines Ablenkelements.

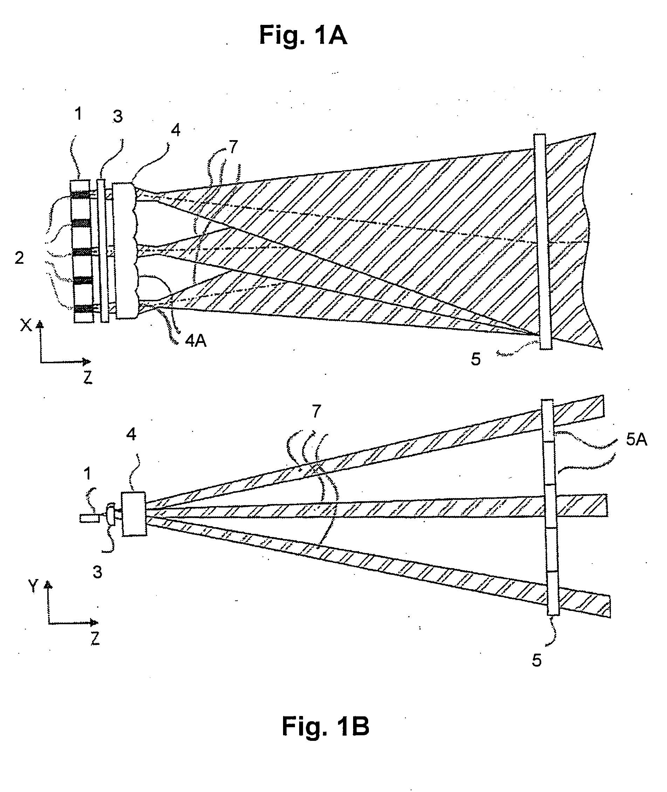

Bei der in Fig. 1 dargestellten optischen Anordnung zur Strahlformung ist mit 1 ein Hochleistungs-Laserdiodenbarren bezeichnet. Der Laserdiodenbarren 1 weist eine Mehrzahl von in x-Richtung nebeneinander angeordneten einzelnen Laserdioden oder Einzelemitter 2 auf, die einen festen Abstand zueinander haben. Ein typischer Laserdiodenbarren 1 besitzt in der Richtung der Nebeneinanderordnung (x-Richtung) eine Abmessung von 10 mm, wobei die Einzelemitter, zum Beispiel 16, in einer Linie angeordnet sind. Die Abmessung der Emitter in x-Richtung variiert zwischen etwa 50 µm und 200 µm und ist abhängig vom konkreten Laserdiodentyp. Die Divergenz der Ausgangsstrahlung jeder einzelnen Laserdiode ist in der in Fig. 1A dargestellten x-z-Ebene relativ gering, der halbe Öffnungswinkel beträgt etwa 6°. In der zu der x-Richtung senkrechten Richtung (y-Richtung) betragen die Abmessungen der einzelnen Laserdioden etwa 1 µm, wobei die Größe durch die Epitaxie vorgegeben ist. Entsprechend ist die Divergenz der Ausgangsstrahlung in der in Fig. 1B dargestellten y-z-Ebene deutlich größer und der halbe Öffnungswinkel ist etwa 30°. Zwischen den einzelnen Laserdioden bzw. Emittern befinden sich Bereiche, in denen keine Strahlung abgestrahlt wird.

Die aufgrund der unterschiedlichen Abmessungen in y-und x-Richtung auftretende extreme Unsymmetrie der Ausgangsstrahlung ist für viele Anwendungen ungünstig. Eine Symmetrierung der Ausgangsstrahlung erfordert eine Umordnung der Strahlbündel der einzelnen Laserdioden derart, dass sie in der ursprünglich stark divergenten Richtung (y-Richtung) linear angeordnet sind.

Parallel zu dem Laserdiodenbarren 1 ist eine Kollimator-Mikrozylinderlinse 3 angeordnet, die, wie in Fig. 1B angedeutet ist, um die z-Achse, die die optische Achse darstellt, gekippt ist. Die Mikrozylinderlinse 3 ist so ausgebildet, dass sie eine ausreichend große Isoplanasie aufweist. Die jeweiligen Ausgangsstrahlbündel 7 der einzelnen Laserdioden 2 werden jeweils für sich kollimiert, erhalten durch die Neigung der Mikrozylinderlinse 3 unterschiedliche Abstrahlwinkel bezüglich der ursprünglichen optischen Achse (z-Achse in Fig. 1) und werden so, in der y-Richtung gesehen, in der Höhe versetzt bzw. getrennt. Die Strahlung in der x-z-Richtung der einzelnen Laserdioden 2 geht unverändert durch die Zylinderlinse hindurch. Als Kollimator-Mikrozylinderlinse kann eine Asphären-Mikrozylinderlinse oder eine gradientenoptische Mikrozylinderlinse mit einem eindimensionalen oder auch zweidimensionalen Brechzahlprofil verwendet werden. Weiterhin ist die Verwendung einer Fresnel-Zylinderlinse, einer Plankonvex- oder Biokonvexlinse einschließlich Faserlinse (runder Querschnitt) sowie einer Mehrkomponenten-Zylinderoptik, bestehend aus zwei oder mehreren der oben beschriebenen Einzellinsen denkbar.

Hinter der Mikrozylinderlinse 3 ist ein Zylinderlinsen-Array 4 angeordnet. Wie aus Fig. 1A zu erkennen ist, werden die Ausgangsstrahlbündel 7 der einzelnen Laserdioden 2 in der Richtung der linearen Anordnung der einzelnen Laserdioden 2 im Barren 1, d.h. in der x-z-Ebene so umgelenkt, dass in einem bestimmten Abstand hinter dem Zylinderlinsen-Array 4 die Bündelschwerpunkte zusammenfallen, d.h., in der x-Richtung liegen in dem vorbestimmten Abstand die Strahlbündel übereinander. In der y-z-Ebene werden die Strahlenbündel nur geringfügig beeinflusst. Figur 1 zeigt den Verlauf der Strahlbündel am Beispiel von den Ausgangsstrahlbündeln dreier linearer Emitter 1 durch die optische Anordnung in der x-z- und y-z-Ebene. Die Hauptstrahlen der drei Strahlbündel sind in der x-z-Ebene als unterbrochene Linien eingezeichnet. Das Zylinderlinsen-Array 4 besitzt hier eine positive Brechkraft und steht in Brennweite zu den Emittern 2.

In dem vorbestimmten Abstand, bei dem gemäß Fig. 1A die Schwerpunkte der einzelnen Strahlenbündel zusammenfallen, ist ein Ablenkelement 5 angeordnet, das die Strahlbündel der einzelnen Laserdioden so ablenkt, dass die durch das Zylinderlinsen-Array 4 in der x-z-Ebene erzeugten unterschiedlichen Einfallswinkel korrigiert werden, d.h., dass die vom Zylinderlinsen-Array 4 erzeugten Neigungswinkel zur z-Achse bzw. optischen Achse wieder kompensiert werden. Das Ablenkelement 5 muss für die Erzielung der unterschiedlichen Ablenkungswinkel linear angeordnete unterschiedliche Ablenkbereiche aufweisen und kann beispielsweise aus schmalen prismatischen Körpern bestehen. Die Realisierung eines solchen Ablenkelements 5 ist jedoch recht aufwendig. Eine einfachere Ausführungsform besteht in einem Gitterarray mit ablenkenden Gittern.

Nach dem Ablenkelement 5 verlaufen die Strahlbündel der einzelnen Laserdioden 2 in Bezug auf die x-z-Ebene in gleicher Richtung, das heißt die Strahlung der einzelnen Laserdioden 2 liegt entsprechend Fig. 1A hinter dem Ablenkelement übereinander. In der y-z-Ebene entsprechend Fig. 1B behalten die einzelnen Bündel 7 weiter ihre zueinander divergenten Richtungen bei.

Dem Ablenkelement 5 ist in einer bevorzugten Ausgestaltungsform der Erfindung eine Fokussieroptik (hier nicht dargestellt) vor- oder nachgeschaltet, die beispielsweise aus Achromaten bestehen kann; die Strahlbündel 7 der einzelnen Laserdioden 2 lassen sich damit sowohl in der y-z-Ebene als auch in der x-z-Ebene sehr gut in einen weitestgehend symmetrischen Strahlfleck geringer Abmessung konzentrieren. Diese Strahlung kann dann mit hoher Effizienz in eine optische Faser (hier nicht dargestellt) eingekoppelt werden.

Bei einem entsprechenden Beispiel wird ein linearer optischer Emitter eingesetzt, dessen 16 Einzelemitter bei der Wellenlänge 800 nm in y-Richtung beugungsbegrenzt mit der Divergenz 0,5 rad abstrahlen. In x-Richtung beträgt die Ausdehnung der Einzelemitter 100 µm, die Abstrahlung in x-Richtung erfolgt mit der Divergenz 0,1 rad. Der Abstand (pitch) Emitter zu Emitter ist 650 µm, d.h. der lineare optische Emitter hat in x-Richtung 10,4 mm Ausdehnung. Das Strahlparameterprodukt beträgt 520 µm*rad in x-Richtung und 0,25 µm*rad in y-Richtung, d.h. die Strahlqualität ist in x-Richtung viel geringer als in y-Richtung.

Zur Kollimation der stark divergenten Abstrahlrichtung (y-Richtung) und Ablenkung der kollimierten einzelnen Strahlbündel 7 ebenfalls in der y-Richtung wird eine Mikrozylinderlinse 3 verwendet, die in diesem Beispiel eine Brennweite von 200 µm hat. Durch Schrägstellen der Mikrozylinderlinse, d.h. Drehung um die optische Achse um etwa 0,14° werden die äußeren Einzelemitter 2 außeraxial kollimiert, und zwar so, dass das äußerste kollimierte Bündel in y-Richtung einen Winkel von etwa 3,5° zur optischen Achse hat. Das Schrägstellen der Zylinderlinse entspricht einem virtuellen Versatz der Emitter in y-Richtung, das Strahlparameterprodukt des gesamten Emitters 1 in y-Richtung ist jetzt auf 6 µm*rad erhöht.

Die Einzellinsen 4A der Zylinderlinsenoptik 4 haben 1000 µm Brennweite und stehen jeweils in Brennweite zu den Emittern 2. Der Abstand der Einzellinsen 4A in x-Richtung beträgt 630 µm und ist somit kleiner als der Abstand (pitch) von 650 µm der Emitter 2 voneinander. Jedem Emitter ist somit eine Einzellinse 4A zugeordnet. In der vorliegenden Anordnung mit einer geraden Anzahl von 16 Emittern sind die beiden zentralen Emitter um jeweils 10 µm und die beiden äußeren Emitter um jeweils 150 µm zur optischen Achse der Einzellinsen 4A versetzt. Nach den Einzellinsen 4A beträgt der Öffnungswinkel der Strahlbündel in x-Richtung etwa 2,9° und im Abstand von 32 mm nach der Zylinderlinsenoptik 4 überlappen die Schwerpunkte aller Strahlbündel in x-Richtung auf dem Ablenkelement 5. In y-Richtung sind die einzelnen Emitter voneinander getrennt und haben etwa den Abstand ihrer Ausdehnung. Als Ergebnis erhält man ein Gesamtstrahlbündel mit einer etwa symmetrischen Ausdehnung von etwa 3,2 x 4,0 mm in der Ebene des Ablenkelementes 5 bei symmetrischen virtuellen Emittern mit etwa 200 x 200 µm Ausdehnung. Die verschiedenen Ablenkbereiche 5A des Ablenkelementes 5 lenken nun die Strahlbündel der einzelnen Emitter 2 in der x-z Ebene derart ab, dass die von der Zylinderlinsenoptik 4 verursachten Neigungswinkel zur z-Achse wieder kompensiert werden. Dies entspricht einer virtuellen räumlichen Überlagerung aller Emitter in der x-Richtung, d.h. das Strahlparameterprodukt des Gesamtemitters 1 beträgt nun 5 µm*rad in x-Richtung und 6 µm*rad in y-Richtung. Diese Eigenschaften des Gesamtstrahlbündels sind vorteilhaft, da nun mit einer einfachen Abbildungsoptik geringer
Apertur in eine Faser eingekoppelt werden kann.

Möchte man den gleichen Abstand des Ablenkelementes 5 mit einer Feldlinse erreichen, so muss diese etwa 32 mm Brennweite haben. Lässt man alle übrigen Parameter unverändert, so erhält man in der Ebene des Ablenkelementes 5 ein Gesamtstrahlbündel mit 6,4 x 3,4 mm Ausdehnung bei unsymmetrischen virtuellen Emittern mit 100 x 200 µm Ausdehnung. Diese Gesamtstrahlbündel ist weniger günstig für die Einkoppelung in eine Faser, da hierfür eine Abbildungsoptik mit größerer Apertur und unterschiedlicher Vergrößerung für die x-und y-Richtung benötigt wird. Symmetrische virtuelle Emitter mit 100 x 100 µm Ausdehnung erhält man mit 100 µm Brennweite der Mikrozylinderlinse 3. Bei Drehung der Mikrozylinderlinse 3 um 0,14° um die optische Achse hat das Gesamtstrahlbündel auf dem Ablenkelement 5 jetzt die Ausdehnung 6,4 x 8,0 mm, somit ist eine noch größere Apertur einer nachfolgenden Abbildungsoptik erforderlich. Eine Verringerung der Drehung der Mikrozylinderlinse 3 um die optische Achse würde wiederum die Trennung der Emitter 2 verschlechtern und die Empfindlichkeit gegen die Unebenheit (smile) des Gesamtemitters 1 erhöhen.

Um mit einer Fourierlinse 32 mm Abstand zum Ablenkelement 5 zu erreichen, muss diese die Brennweite 16 mm haben. Aufgrund der Divergenz der Strahlbündel in x-Richtung beträgt die Apertur dieser Linse wenigstens 14 mm, d.h. die Linse ist "schneller" als f: 1,2. Bei der Ausdehnung des Feldes von 11 mm sind beträchtliche Abbildungsfehler durch Astigmatismus und Coma mit einer solchen Linse unvermeidbar. Schließlich sind die Segmente 5A auf dem Ablenkelement 5 nur halb so groß, wie im Fall der Verwendung der Zylinderlinsenoptik 4 oder einer Feldlinse, was die Herstellung des Ablenkelementes 5 erschwert.

In dem angeführten Beispiel ist erläutert, in welcher Weise die Zylinderlinsenoptik 4 es ermöglicht, für einen gegebenen idealisierten Emitter Eigenschaften und Ausdehnung des Gesamtstrahlbündels, Ausdehnung und Symmetrie der virtuellen Emitter und Ort und Größe des Ablenkelementes 5 den Anforderungen anzupassen. Hierbei kann insbesondere eine möglichst einfache nachfolgende Abbildung in einen symmetrischen Spot, eine geringe Baulänge, eine geringe Apertur nachfolgender Linsen sowie die Berücksichtigung von Größe und Herstellbarkeit des Ablenkelementes 5 realisiert werden. Die dargelegten Überlegungen gelten in gleicher Weise auch für Systeme, bei denen zusätzlich die Abbildungsqualitäten der Linsen, die gewünschte Effizienz, die Ebenheit des Barrens (smile) und Justage- bzw. Montagetoleranzen berücksichtigt sind.

Das Ablenkelement 5 muss jedoch noch die in Fig. 1A dargestellten unterschiedlichen Einfallswinkel der Strahlbündel der einzelnen Laserdioden 2 in der x-z-Ebene korrigieren. Durch die in y-Richtung entsprechend Fig. 1B vorliegende räumliche Trennung der einzelnen Strahlbündel kann die Korrektur in der Ebene des Ablenkelements prinzipiell realisiert werden, wobei für jedes einzelne Strahlbündel eine unterschiedliche Ablenkung notwendig ist. Im Ausführungsbeispiel mit einer geraden Anzahl von 16 Emittern liegen diese Ablenkwinkel zwischen ∼0,6° für das Strahlbündel eines Mittelemitters und ∼9,6° für die Strahlbündel der Randemitter. Entsprechend den Abmessungen der Strahlbündel in der Ebene des Ablenkelements müssen die einzelnen ablenkenden Bereiche dabei eine Breite von 0,2 mm in y-Richtung und etwa 4 mm in x-Richtung aufweisen. Im Ausführungsbeispiel wird ein klassischer Aufbau mit 16 schmalen prismatischen Körpern verwendet.

Das dem Zylinderlinsen-Array 4 nachgeordnete Ablenkelement 5 lenkt somit jedes Strahlbündel in der x-z-Ebene derart ab, dass die durch das Zylinderlinsen-Array 4 verursachte Ablenkung jeweils wieder kompensiert wird. Die Hauptstrahlen der Strahlbündel fallen in der x-z-Ebene nach dem Ablenkelement 5 also mit der optischen Achse zusammen. Durch eine dem Ablenkelement 5 nachfolgende Abbildungs- bzw. Fokussieroptik (nicht dargestellt) lässt sich das Gesamtstrahlbündel beispielsweise in eine Glasfaser (nicht dargestellt) mit angepasstem Kerndurchmesser und Akzeptanzwinkel einkoppeln.

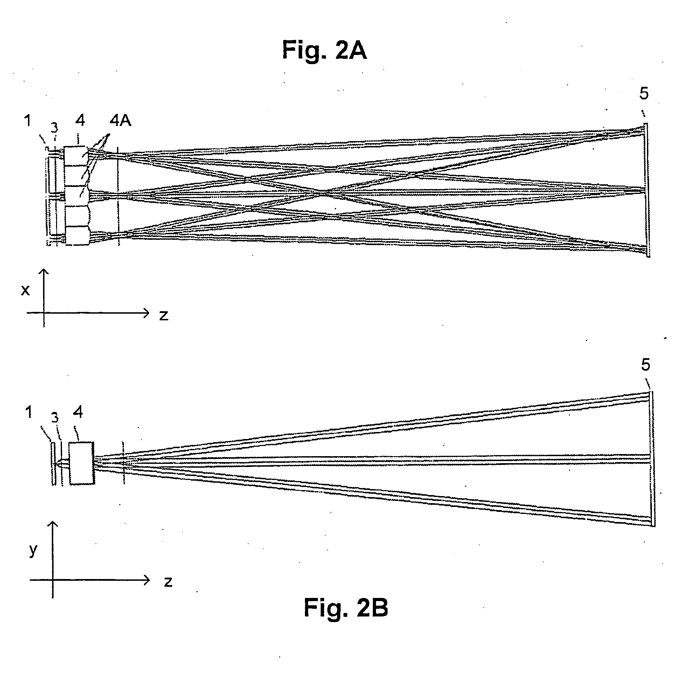

Figur 2 zeigt den Verlauf der Ausgangsstrahlbündel der drei linearen Emitter von Figur 1. Figur 2A zeigt hierbei erneut die x-z-Ebene, Figur 2B die y-z-Ebene. In der Darstellung von Figur 2 ist jedes Ausgangsstrahlbündel aus den Strahlbündeln dreier Feldpunkte eines Emitters 2 aufgebaut, wodurch sich die Transformation der Strahleigenschaften der Ausgangsstrahlbündel durch das Zylinderlinsen-Array 4 und die Zylinderlinsen-Optik 3 gut nachvollziehen lässt. Das Zylinderlinsen-Array 4 besitzt hier eine positive Brechkraft und steht in Brennweite zu den Emittern 2.

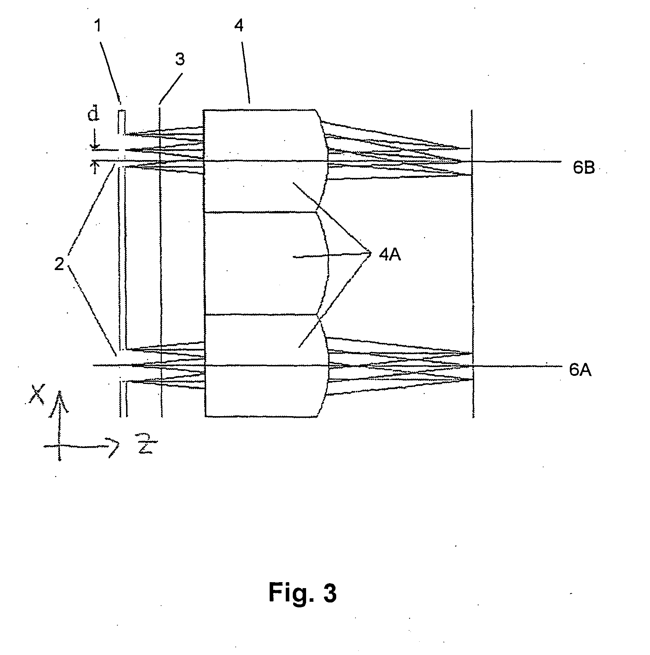

Figur 3 zeigt einen Detailausschnitt von Figur 2. Hier ist der unterschiedliche Pitch von Laserdioden-Array 1 und Zylinderlinsen-Array 4 und der sich hieraus ergebende, in x-Richtung zunehmende Versatz zwischen Emitter 2 und Einzellinse 4A zu erkennen: Die untere der drei dargestellten Einzellinsen ist hier die mittlere bzw. die bezüglich der x-Richtung auf der optischen Achse (z-Achse) angeordnete Einzellinse der Vorrichtung. Deren optische Achse 6A weist hier einen Versatz von d=0 gegenüber der Mitte des ihr zugeordneten Emitters 2 auf. Die obere der drei dargestellten Einzellinsen weist den mit dem Buchstaben d bezeichneten Versatz zwischen ihrer optischen Achse 6B und der Mitte des zugehörigen Emitters 2 auf. Das Zylinderlinsen-Array 4 besitzt hier eine positive Brechkraft und steht in Brennweite zu den Emittern 2.

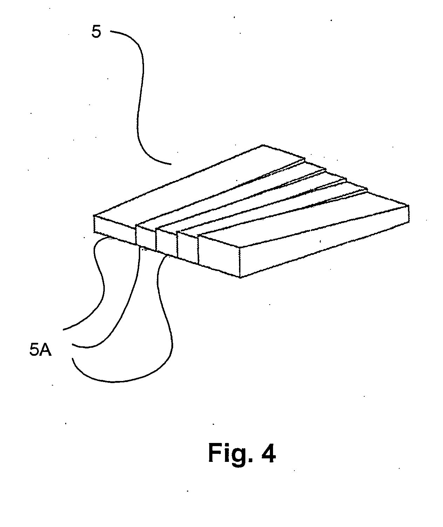

Figur 4 zeigt schematisch den Aufbau eines aus Prismen zusammengesetzten Ablenkelements 5. Die Figur zeigt nicht die erfindungsgemäße Vorrichtung, kann jedoch zur Erläuterung einzelner Aspekte der Vorrichtung dienen. In der dargestellten Ausführungsform ist das Ablenkelement 5 aus einem Feld von mehreren Prismen 5A aufgebaut.

## Patentansprüche

1. Optische Symmetrierungsvorrichtung zur Symmetrierung der Strahlung einer Mehrzahl von in fester Zuordnung in einer ersten x-Richtung nebeneinander angeordneten linearen optischen Emittern (2), die in eine zur x-Richtung senkrechte, gemeinsame z-Richtung abstrahlen und deren Ausgangsstrahlbündel in der x-Richtung eine deutlich geringere Strahlqualität aufweisen als in der zur x-Richtung und zur z-Richtung senkrechten y-Richtung,
mit einer in z-Richtung nach den optischen Emittern (2) angeordneten Zylinderlinsenoptik (3) mit einer oder mehreren Zylinderlinsen, die die Ausgangsstahlbündel der einzelnen Emitter in der y-z-Ebene kollimiert und transformiert,
wobei mindestens eine der Zylinderlinsen der Zylinderlinsenoptik (3) um die z-Achse gekippt angeordnet ist und/oder in z-Richtung hinter der Zylinderlinsenoptik ein optionales Ablenkelement (3B) angeordnet ist, derart, dass die Ausgangsstrahlbündel der einzelnen linearen optischen Emitter (2) mit für jeden einzelnen Emitter unterschiedlichen Winkeln in y-Richtung abgelenkt, mit einem der Zylinderlinsenoptik in z-Richtung nachgeordneten ersten Ablenkelement, das die Strahlbündel der einzelnen linearen optischen Emitter (2) in der x-Richtung mit jeweils unterschiedlichen Ablenkwinkeln derart umlenkt, dass in einem vorbestimmten Abstand die Hauptstrahlen bzw. Schwerpunkte der Lichtintensitäten der einzelnen Strahlbündel zusammenfallen sowie
einem in y-Richtung nach dem ersten Ablenkelement in dem vorbestimmten Abstand von dem ersten Ablenkelement angeordneten zweiten Ablenkelement (5), das die Strahlbündel der Emitter derart ablenkt, dass die durch das erste Ablenkelement verursachte Ablenkung der Strahlbündel in der x-z-Ebene kompensiert werden,
***dadurch gekennzeichnet, dass***
das erste Ablenkelement mindestens ein Zylinderlinsen-Array (4) mit mindestens zwei in x-Richtung nebeneinander angeordneten zylindrischen Einzellinsen (4A) enthält oder daraus besteht, wobei der Abstand zweier benachbarter Einzellinsen (4A) kleiner ist als der Abstand zweier benachbarter linearer optischer Emitter (2).

2. Vorrichtung nach dem vorhergehenden Anspruch,
***dadurch gekennzeichnet, dass***
die mindestens zwei zylindrischen Einzellinsen (4A) mindestens eines Zylinderlinsen-Arrays senkrecht zur z-Richtung nebeneinander angeordnet sind.

3. Vorrichtung nach einem der vorhergehenden Ansprüche,
***dadurch gekennzeichnet, dass***
mindestens einer der linearen optischen Emitter (2) eine Laserdiode enthält oder daraus besteht.

4. Vorrichtung nach dem vorhergehenden Anspruch,
***dadurch gekennzeichnet, dass***
mindestens eine der Laserdioden eine Breitstreifenlaserdiode ist.

5. Vorrichtung nach einem der vorhergehenden Ansprüche,
***dadurch gekennzeichnet, dass***
die Brennweite der Zylinderlinsenoptik (3), der Verkippungswinkel der Zylinderlinsenoptik (3) um die z-Achse, die Brennweite der Einzellinsen (4A) des mindestens einen Zylinderlinsenarrays (4) und der Abstand der zylindrischen Einzellinsen (4A) mindestens eines der Zylinderlinsen-Arrays (4) und/oder die Ablenkwinkel des optionalen Ablenkelementes (B) für die y-Richtung so festgelegt sind, dass das Gesamtstrahlbündel nach dem zweiten Ablenkelement (5) in der x-z-Ebene und der y-z-Ebene eine gleiche Divergenz und/oder eine gleiche Ausdehnung aufweist.

6. Vorrichtung nach einem der vorhergehenden Ansprüche,
***dadurch gekennzeichnet, dass***
die Brennweiten der Zylinderlinsenoptik (3) und der Einzellinsen (4A) des mindestens einen Zylinderlinsenarrays (4) so bestimmt sind, dass die virtuelle Taille der Strahlbündel in der x-z und y-z Ebene eine etwa gleiche Ausdehnung aufweist.

7. Vorrichtung nach einem der vorhergehenden Ansprüche,
***dadurch gekennzeichnet, dass***
der Abstand zweier benachbarter Einzellinsen (4A) mindestens eines der Zylinderlinsen-Arrays (4) und die unterschiedlichen Ablenkwinkel des zweiten Ablenkelements (5) so gewählt sind, dass das zweite Ablenkelement (5) den geringstmöglichen Abstand zu dem Zylinderlinsen-Array (4) aufweist.

8. Vorrichtung nach einem der vorhergehenden Ansprüche,
***dadurch gekennzeichnet, dass***
die Zylinderlinsenoptik (3) eine Fresnellinse, eine Plankonvex- oder Bikonvexlinse und/oder eine Kombination derselben aufweist und/oder dass die Zylinderlinsenoptik (3) als refraktives optisches Element mit mindestens einer sphärischen oder asphärischen Oberfläche oder als Gradientenzylinderoptik ausgebildet ist.

9. Vorrichtung nach dem vorhergehenden Anspruch,
***dadurch gekennzeichnet, dass***
die Gradientenzylinderoptik ein eindimensionales oder ein zweidimensionales Brechzahlprofil aufweist.

10. Vorrichtung nach einem der vorhergehenden Ansprüche,
***dadurch gekennzeichnet, dass***
das optionale Ablenkelement (3B) der Zylinderlinsenoptik (3) zwischengeschaltet oder direkt nachgeschaltet ist.

11. Vorrichtung nach einem der Ansprüche 1 bis 10,
***dadurch gekennzeichnet, dass***
das optionale Ablenkelement (3B) dem mindestens einen Zylinderlinsen-Array (4) direkt nachgeschaltet ist.

12. Vorrichtung nach einem der vorhergehenden Ansprüche,
***dadurch gekennzeichnet, dass***
das zweite Ablenkelement (5) Prismen, Planplatten, ablenkende Gitter, ablenkende gradientenoptische Bereiche, Spiegel und/oder Zylinderlinsen aufweist.

13. Vorrichtung nach einem der vorhergehenden Ansprüche,
***dadurch gekennzeichnet, dass***
das zweite Ablenkelement (5) als Feld von Ablenkgittern und/oder als Prismenfeld ausgebildet ist.

14. Vorrichtung nach dem vorhergehenden Anspruch,
***dadurch gekennzeichnet, dass***
die Ablenkbereiche oder Prismen mit jeweils unterschiedlichen Ablenkwinkeln des Ablenkgitterfeldes oder des Prismenfeldes in der y-Richtung nebeneinander angeordnet sind.

15. Vorrichtung nach dem vorhergehenden Anspruch,
***dadurch gekennzeichnet, dass***
die Breite der Ablenkbereiche oder der Prismen in der y-Richtung dem Abstand der Schwerpunkte der Strahlbündel in y-Richtung oder einem vielfachen hiervon, auf der Ebene des zweiten Ablenkelementes (5) entsprechen.

16. Vorrichtung nach einem der vorhergehenden Ansprüche,
***dadurch gekennzeichnet, dass***
mindestens eine der Einzellinsen (4A) als Plan-Konvex- oder Bi-Konvex-Zylinderlinse mit sphärischer oder asphärischer Oberfläche, als Gradientenzylinderoptik mit positiver Brechkraft, oder als Plan-Konkav- oder Bi-Konkav-Zylinderlinse mit sphärischer oder asphärischer Oberfläche oder als Gradientenzylinderoptik mit negativer Brechkraft ausgebildet ist.

17. Vorrichtung nach einem der vorhergehenden Ansprüche,
***dadurch gekennzeichnet, dass***
das erste Ablenkelement mindestens zwei Zylinderlinsen-Arrays (4) mit positiver und/oder negativer Brechkraft der Einzellinsen (4A) enthält oder daraus besteht.

18. Vorrichtung nach einem der vorhergehenden Ansprüche,
***dadurch gekennzeichnet, dass***
dem zweiten Ablenkelement (5) eine Kollimatoroptik oder anamorphotische Kollimatoroptik voroder nachgeschaltet ist, zur Minimierung der Divergenz des Gesamtstrahlenbündels mindestens in der y-z-Ebene.

19. Vorrichtung nach dem vorhergehenden Anspruch,
***dadurch gekennzeichnet, dass***
das zweite Ablenkelement (5) der Kollimatoroptik in möglichst kleinem Abstand nachgeschaltet ist.

20. Vorrichtung nach einem der beiden vorhergehenden Ansprüche,
***dadurch gekennzeichnet, dass***
dem zweiten Ablenkelement (5) und der Kollimatoroptik eine Fokussieroptik nachgeordnet ist.

21. Vorrichtung nach dem vorhergehenden Anspruch,
***dadurch gekennzeichnet, dass***
der Fokussieroptik eine Lichtleitfaser nachgeordnet ist, zur Einkopplung des Gesamtstrahlenbündels.

22. Vorrichtung nach einem der beiden vorhergehenden Ansprüche,
***dadurch gekennzeichnet, dass***
für die Einkopplung in eine Lichtleitfaser die Brennweiten der Fokussieroptik, der Kollimatoroptik, der Zylinderlinsenoptik (3) und des Zylinderlinsenarrays (4) sowie der Abstand zweier benachbarter Einzellinsen (4A) so gewählt werden, dass sich eine geringstmögliche Länge der gesamten Anordnung ergibt.

23. Vorrichtung nach einem der Ansprüche 20 oder 21,
***dadurch gekennzeichnet, dass***
die Fokussieroptik mindestens einen Achromaten aufweist.

24. Verwendung einer Vorrichtung nach einem der vorhergehenden Ansprüche im Bereich Materialbearbeitung, Medizintechnik, Telekommunikationstechnik, Beleuchtungs- oder Displaytechnik, Analytik, Drucktechnik oder Fototechnik oder zum Pumpen von Lasern.
